# EUROPÄISCHE PATENTSCHRIFT

(11) **EP 2 736 676 B1**
(45) Veröffentlichungstag und Bekanntmachung des Hinweises auf die Patenterteilung: **28.10.2015**
(21) Anmeldenummer: 12775601.3
(22) Anmeldetag: 20.07.2012
(51) Int. Cl.: B24B 39/00, B24B 39/06

(54) **GLATTWALZKOPF**
BURNISHING HEAD
TÊTE DE BRUNISSAGE

(30) Priorität: 28.07.2011 DE 202011103890 U
(43) Veröffentlichungstag der Anmeldung: 04.06.2014
(73) Patentinhaber: Hegenscheidt-MFD GmbH & Co. KG, 41812 Erkelenz (DE)
(72) Erfinder: HEIMANN, Alfred, 52078 Aachen (DE)
(74) Vertreter: Patentanwälte Findeisen & Neumann
(86) Internationale Anmeldenummer: PCT/DE2012/000749
(87) Internationale Veröffentlichungsnummer: WO 2013/013658

(56) Entgegenhaltungen:
- WO-A1-03/057400
- DE-A1- 2 400 855
- DE-U1-202011 004 718
- "Universelle Feindreh & Glattwalzmaschine fUEr die Kurbenwellen-Fertigung; MoDellreihe 7794", INTERNET CITATION, Februar 2001 (2001-02), XP002239218, Gefunden im Internet: URL:http://www.hegenscheidt-mfd.de/de/masc hinen/pdf/7794_de.pdf [gefunden am 2003-04-24]

## Beschreibung

Die Erfindung betrifft einen Glattwalzkopf zum Glattwalzen der ringförmigen Planflächen am Passlager von Kurbelwellen mit Hilfe von zwei zylinderförmigen Glattwalzrollen, die parallel zueinander und nebeneinander in einem Glattwalzkopfgehäuse drehbar angeordnet sind, das um seine Längsachse in die Arbeitsstellung schwenkbar ist. Siehe z.B WO 03/057400 A1.

Ein Glattwalzkopf in seiner bekannten Ausführungsform, muss zum Glattwalzen rechtwinklig zur Drehachse der Kurbelwelle eingestellt werden. Dies ist, betrachtet man die erforderliche Genauigkeit, ohne Einstellhilfe nicht möglich. Bei fehlender oder fehlerhafter Einstellung erhält man Glattwalzresultate mit ungleichmäßig verteilter Glättung.

Der vorliegenden Erfindung liegt infolge dessen die Aufgabe zugrunde, unbefriedigende Glattwalzergebnisse zu verhindern.

Als Lösung wird vorgeschlagen, dass jede Glattwalzrolle in einem Rollenkäfig drehbar gelagert ist, der jeweils im Glattwalzkopfgehäuse mit einem Spiel zwischen 0,1 mm und 0,5 mm seitlich verschiebbar vorgesehen ist.

Vorteilhafte Ausgestaltungen dieser Lösung bestehen darin, dass der seitlich verschiebbare Rollenkäfig mit wenigstens einem leistenförmigen Vorsprung versehen ist, der sich quer zur Drehachse der Glattwalzrolle erstreckt und in eine Nut des Glattwalzkopfgehäuses eingreift.

Wie an sich bekannt, ist jede Glattwalzrolle mit einem zylinderförmigen Abschnitt im Rollenkäfig drehbar gelagert. An diesem zylinderförmigen Abschnitt der Glattwalzrolle ist eine Sicherung gegen Herausfallen vorgesehen. Als Sicherung gegen das Herausfallen der Glattwalzrolle wird eine Zylinderkopfschraube vorgeschlagen.

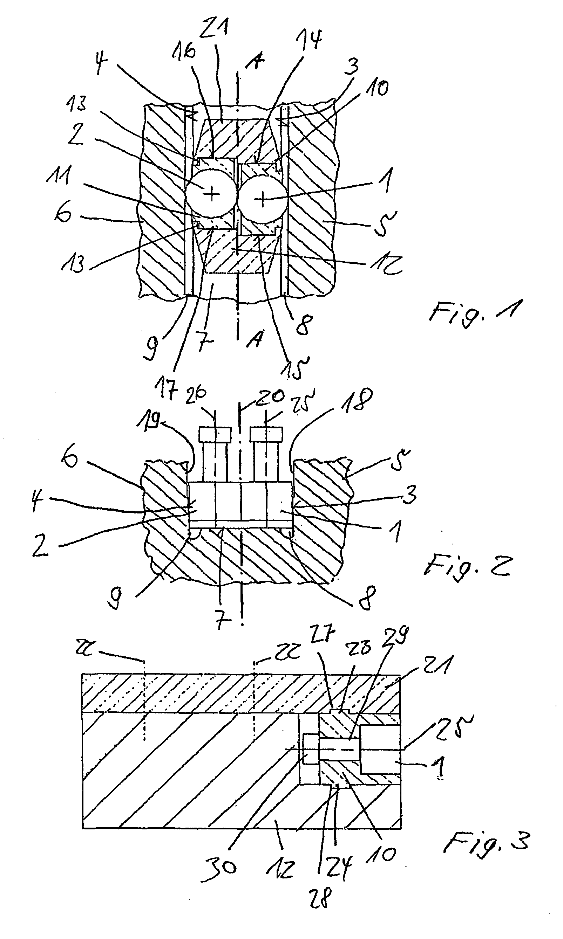

Nachfolgend wird die Erfindung an einem Ausführungsbeispiel näher beschrieben. Es zeigen in jeweils nahezu maßstäblicher aber vereinfachter Darstellung die
Fig. 1 die Vorderansicht des Glattwalzkopfes
Fig. 2 eine Draufsicht auf den Glattwalzkopf
Fig. 3 einen Längsschnitt durch den Glattwalzkopf entlang der Linie A-A der Fig. 1

Zwei Glattwalzrollen 1 und 2 sind dazu vorgesehen, die ringförmigen Planflächen 3 und 4 an den Kurbelwangen 5 und 6 glatt zu walzen. An den Übergängen zwischen den Kurbelwangen 5 und 6 und dem Passlager 7 sind jeweils Einstiche 8 und 9 vorhanden.

Jede Festwalzrolle 1 und 2 ist in einem, in Bezug auf das Glattwalzkopfgehäuse 12 jeweils seitenbeweglichen Rollenkäfig 10 bzw. 11 drehbar gelagert. Zur seitenbeweglichen Verschiebbarkeit list ein Spiel 13 vorgesehen, das sowohl beim Rollenkäfig 10 als auch beim Rollenkäfig 11 vorliegt. Das Spiel 13 liegt zwischen 0,1 mm und 0,5 mm und beträgt vorzugsweise 0,3 mm. Auf diese Weise stützen sich die Rollenkäfige 10 und 11 auf einer ebenen Fläche 14,15 bzw. 16,17 ab und sind damit in einer Ebene durch die Kurbelwellenachse (nicht gezeigt) verschiebbar und auch schwenkbar. Auf diese Weise richten sich die Glattwalzrollen 1 und 2 nur nach der Lage der Ölbunde 18 und 19 aus, das heißt, es ist keine Einstellhilfe zur genauen Ausrichtung des Glattwalzkopfgehäuses 12 mehr erforderlich. Zwischen der Hauptdrehachse (nicht gezeigt) der Kurbelwelle (ebenfalls nicht gezeigt) und der Schwenkachse 20, um welche der Glattwalzkopf in seiner Arbeitsstellung schwenkbar ist, ist eine strikte rechtwinklige Ausrichtung nicht mehr erforderlich.

Das Glattwalzkopfgehäuse besteht aus einem unteren Teil 12 und einem darauf aufgeschraubten Teil 21. Schrauben 22 sind für diese Verbindung vorgesehen. Die längsverschiebbaren Rollenkäfige 10 und 11 weisen jeweils Vorsprünge 23 und 24 auf, die sich quer zur Drehachse 25 bzw. 26 der Festwalzrollen 1 bzw. 2 erstrecken. Entsprechende Nuten 27 und 28 im Glattwalzkopfgehäuse 12 bzw. im aufgeschraubten Teil 21 nehmen die Vorsprünge 23 und 24 der Rollenkäfige 10 und 11 auf.

Mit einem zylinderförmigen Abschnitt 29 sind die Festwalzrollen 1 und 2 im Rollenkäfig 10 bzw. 11 drehbar gelagert. Eine Sicherung in Form einer Zylinderkopfschraube 30 sorgt dafür, dass die Glattwalzrollen 1 bzw. 2 nicht aus den Rollenkäfigen 10 bzw. 11 herausfallen können.

### Bezugszeichenliste

- 1: Glattwalzrolle
- 2: Glattwalzrolle
- 3: Planfläche
- 4: Planfläche
- 5: Kurbelwange
- 6: Kurbelwange
- 7: Passlager
- 8: Einstich
- 9: Einstich
- 10: Rollenkäfig
- 11: Rollenkäfig
- 12: Glattwalzkopfgehäuse
- 13: Spiel
- 14: ebene Fläche
- 15: ebene Fläche
- 16: ebene Fläche
- 17: ebene Fläche
- 18: Ölbund
- 19: Ölbund
- 20: Schwenkachse
- 21: aufgeschraubtes Teil
- 22: Schrauben
- 23: Vorsprung
- 24: Vorsprung
- 25: Drehachse
- 26: Drehachse
- 27: Nut
- 28: Nut
- 29: zylinderförmiger Abschnitt
- 30: Zylinderkopfschraube

## Patentansprüche

1. Glattwalzkopf zum Glattwalzen der ringförmigen Planflächen (3, 4) am Passlager (7) von Kurbelwellen mit Hilfe von zwei zylinderförmigen Glattwalzrollen (1, 2), die parallel zueinander und nebeneinander in einem Glattwalzkopfgehäuse (12) angeordnet sind, das um seine Längsachse (20) in die Arbeitsstellung schwenkbar ist, **dadurch gekennzeichnet, dass**
- jede Glattwalzrolle (1, 2) in einem Rollenkäfig (10, 11) drehbar gelagert ist,
- der jeweils im Glattwalzkopfgehäuse (12) mit einem Spiel (13) zwischen 0,1 mm und 0,5 mm seitlich verschiebbar vorgesehen ist.

2. Glattwalzkopf nach Anspruch 1, **dadurch gekennzeichnet,**
**dass** der Rollenkäfig (10, 11) mit wenigstens einem leistenförmigen Vorsprung (23, 24), der sich quer zur Drehachse (25) der Glattwalzrolle (1, 2) erstreckt, in eine Nut (27, 28) des Glattwalzkopfgehäuses (12) eingreift.

3. Glattwalzkopf nach Anspruch 1, **dadurch gekennzeichnet,**
**dass** jede Glattwalzrolle (1, 2) mit einem zylinderförmigen Abschnitt (29) im Rollenkäfig (10, 11) gelagert ist.

4. Glattwalzkopf nach Anspruch 3, **dadurch gekennzeichnet,**
**dass** am zylinderförmigen Abschnitt (29) der Glattwalzrolle (1, 2) eine Sicherung gegen Herausfallen vorgesehen ist.

5. Glattwalzkopf nach Anspruch 4, **dadurch gekennzeichnet,**
**dass** als Sicherung gegen das Herausfallen der Glattwalzrolle (1, 2) aus dem Rollenkäfig (10, 11) eine Zylinderkopfschraube (30) vorgesehen ist.

## Claims

1. Finishing roller head for finishing the ring-shaped flat end faces (3, 4) on the thrust bearing (7) of crankshafts by means of two cylindrical finishing rollers (1, 2) which are arranged side by side in parallel to each other within a finishing roller head housing (12) that is pivotable about its longitudinal axis (20) to reach its working position, **characterized in that** each finishing roller (1, 2) is pivoted in a cage (10, 11) which is provided in the finishing roller head housing (12) with a play (13) between 0.1 mm and 0.5 mm and is laterally relocatable.

2. Finishing roller head according to claim 1, **characterized in that** the cage (10, 11) with at least one strip-shaped projection (23, 24) that extends transversely to the rotation axis (25) of the finishing roller (1, 2), engages in a groove (27, 28) of the finishing roller head housing (12).

3. Finishing roller head according to claim 1, **characterized in that** each finishing roller (1, 2) is mounted in a cage (10, 11) with its cylindrical section (29).

4. Finishing roller head according to claim 3, **characterized in that** a safeguard against falling out is provided at the cylindrical section (29) of the finishing rollers (1, 2).

5. Finishing roller head according to claim 4, **characterized in that** a hexagon head cap screw (30) is provided as a safeguard against the finishing roller (1, 2) falling out of the cage (10, 11).

## Revendications

1. Tête de laminage de finition pour le laminage des surfaces planes annulaires (3, 4) au niveau du palier de réglage (7) de vilebrequins, au moyen de deux galets de laminage cylindriques (1, 2) positionnés en parallèle l'un à côté de l'autre dans un logement pour tête de laminage de finition (12) capable de pivoter en position de travail autour de son axe longitudinal (20), **caractérisée en ce que**
- chaque galet de laminage de finition (1, 2) peut entrer en rotation dans un support à galet (10, 11),
- le logement pour tête de laminage (12) peut être déplacé latéralement avec un jeu (13) entre 0,1 mm et 0,5 mm.

2. Tête de laminage de finition selon la revendication 1, **caractérisée en ce que** le support à galet (10, 11) est pourvu d'au moins une saillie (23, 24), qui s'étend transversalement par rapport à l'axe de rotation (25) du galet de laminage de finition (1, 2) et s'engage dans une rainure (27, 28) du logement pour tête de laminage de finition (12).

3. Tête de laminage selon la revendication 1, **caractérisée en ce que** chaque galet de laminage de finition (1, 2) équipé d'une partie cylindrique (29) est monté dans un support à galet (10, 11).

4. Tête de laminage selon la revendication 3, **caractérisée en ce qu'**un dispositif de sécurité contre la chute est prévu au niveau de la partie cylindrique (29) du galet de laminage de finition (1, 2).

5. Tête de laminage selon la revendication 4, **caractérisée en ce qu'**une vis à tête cylindrique (30) est prévue en tant que dispositif de sécurité contre la chute du galet de laminage de finition (1, 2) hors du support à galet (10, 11).
